(19) Europäisches Patentamt
European Patent Office
Office européen des brevets

(11) **EP 4 678 309 A1**

(12) **EUROPEAN PATENT APPLICATION**
published in accordance with Art. 153(4) EPC

(43) Date of publication:
**14.01.2026 Bulletin 2026/03**

(21) Application number: **24767066.4**

(22) Date of filing: **01.03.2024**

(51) International Patent Classification (IPC):
*B22F 1/05* (2022.01)   *B22F 1/06* (2022.01)
*B22F 9/08* (2006.01)   *B22F 10/22* (2021.01)
*B33Y 70/00* (2020.01)   *C22C 9/00* (2006.01)
*C22C 19/05* (2006.01)   *C22C 19/07* (2006.01)
*C22C 38/00* (2006.01)   *C22C 38/52* (2006.01)

(52) Cooperative Patent Classification (CPC):
**B22F 1/05; B22F 1/06; B22F 9/08; B22F 10/22;**
**B33Y 70/00; C22C 9/00; C22C 19/05; C22C 19/07;**
**C22C 38/00; C22C 38/52;** Y02P 10/25

(86) International application number:
**PCT/JP2024/007810**

(87) International publication number:
**WO 2024/185698 (12.09.2024 Gazette 2024/37)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **03.03.2023 JP 2023033116**

(71) Applicant: **Sanyo Special Steel Co., Ltd.**
**Himeji-shi, Hyogo 672-8677 (JP)**

(72) Inventors:
• **HAGIYA, Toru**
**Himeji-shi, Hyogo 672-8677 (JP)**
• **MIURA, Yuka**
**Himeji-shi, Hyogo 672-8677 (JP)**

(74) Representative: **Müller-Boré & Partner**
**Patentanwälte PartG mbB**
**Friedenheimer Brücke 21**
**80639 München (DE)**

(54) **METAL POWDER FOR ADDITIVE MANUFACTURING**

(57) An object of the present invention is to provide a metal powder with a low content of acicular particles, suitable for use in a directed energy deposition additive manufacturing apparatus in which the powder is supplied through a nozzle. The present invention provides a metal powder for additive manufacturing, wherein the proportion of the number of particles each having an aspect ratio of 0.4 or less and a longest diameter of 150 $\mu$m or more is 0.30% or less, based on the number of all particles constituting the powder.

[FIG. 2]

(a) top view

Particle parallel to the mesh

(b) side view

Particle standing upright

**EP 4 678 309 A1**

**Description**

FIELD OF INVENTION

The present invention relates to a metal powder suitable for use in metal additive manufacturing. More particularly, the present invention relates to a metal powder suitable for use in directed energy deposition metal additive manufacturing.

BACKGROUND ART

In recent years, metal additive manufacturing has been used in the production of a shaped article made of metal. Representative examples of metal additive manufacturing include powder bed fusion additive manufacturing and directed energy deposition additive manufacturing.

In powder bed fusion additive manufacturing, a laser beam or an electron beam is irradiated to a portion of a metal powder that has been spread, and the irradiated portion of the spread powder is melted and solidified. Metal particles are bonded with each other due to melting and solidification. The beam is irradiated selectively on a portion of the metal powder, and the non-irradiated portion of the powder does not melt. As a result, a bonding layer is formed only at the irradiated portion.

On the thus formed bonding layer, another layer of metal powder is spread, and a laser beam or an electron beam is irradiated to the newly spread metal powder. As a result, metal particles are melted and solidified due to the irradiation, to form a new bonding layer. The new bonding layer is also bonded with the existing bonding layer.

An assembly of bonding layers grows gradually, by repeating the operation of melting and solidifying metal particles by the irradiation, sequentially. This growth gives a shaped article having a three-dimensional shape. The use of such additive manufacturing makes it possible to easily obtain a shaped article having a complex shape. See Patent Document 1, as one example of powder bed fusion additive manufacturing.

In directed energy deposition additive manufacturing, a laser is used as a heat source, and a metal powder is injected from a nozzle to a laser-focused portion, to melt the metal powder, thereby layering bonding layers. See Patent Document 2, as one example of directed energy deposition additive manufacturing.

To develop a powder suitable for use in metal additive manufacturing, attempts have been made to improve the properties of metal powders, such as laser absorption rate, inclusion concentration, fluidity, and the like. The fluidity of a metal powder is one of the very important properties, from the viewpoint of uniformly spreading the metal powder in directed energy deposition additive manufacturing, the viewpoint of continuously supplying the metal powder from a nozzle in directed energy deposition additive manufacturing, and the like.

The method of measuring the flow rate of a metal powder is defined in Japanese Industrial Standards (JIS) Z2502:2020. The fluidity of a metal powder as defined in JIS is evaluated by measuring the time (s/50 g) required for 50 g of the metal powder to fall from a funnel containing a sample of the powder. In general, it is known that the fluidity of a powder increases as the particles constituting the powder have a shape closer to a sphere. For a powder for metal additive manufacturing, attempts have been made to increase the fluidity of the powder by increasing the sphericity of the particles constituting the powder as much as possible. Further, for example, a technique has also been proposed for improving the fluidity of a metal powder by mixing nanoparticles with the metal powder to reduce the adhesion between the particles constituting the metal powder (see Patent Document 3).

CITATION LIST

PATENT DOCUMENTS

Patent Document 1: JP 4661842 B
Patent Document 2: JP 2015-196264 A
Patent Document 3: JP 2021-75784 A

SUMMARY OF INVENTION

TECHNICAL PROBLEM

In general, the particle size of the metal powder used in directed energy deposition additive manufacturing is within the range of 45 to 150 μm, and is larger than the particle size of the metal powder used in powder bed fusion additive manufacturing, which is within the range of 10 to 45 $\mu$m.

In directed energy deposition additive manufacturing, the fluidity of a metal powder is important because the powder is injected from a nozzle, and thus it is necessary to allow the metal powder to flow by its own weight within a narrow pipe. In the case where the metal powder has a low fluidity, the powder may clog the pipe during the additive manufacturing operation, making it difficult to supply the powder appropriately to the portion at which the powder is melted by the laser. As a result, the additive manufacturing operation may be interrupted.

The method of evaluating the flow rate of a metal powder as defined in JIS Z2502:2020 described above is carried out by sampling a small amount of sample as small as 50 g, and thus is not capable of completely evaluating the flow rate required in directed energy deposition additive manufacturing, in practice.

In order not to interrupt the additive manufacturing operation in a directed energy deposition additive manufacturing apparatus, it is necessary to allow the powder to flow in a nozzle for several hours without clogging. In the case where additive manufacturing is actually carried out for a long period of time using a directed energy deposition additive manufacturing apparatus, however, even a metal powder having a high sphericity and an excellent fluidity may fail to appropriately flow inside a transport nozzle, possibly causing nozzle clogging and forcing the additive manufacturing operation to be interrupted.

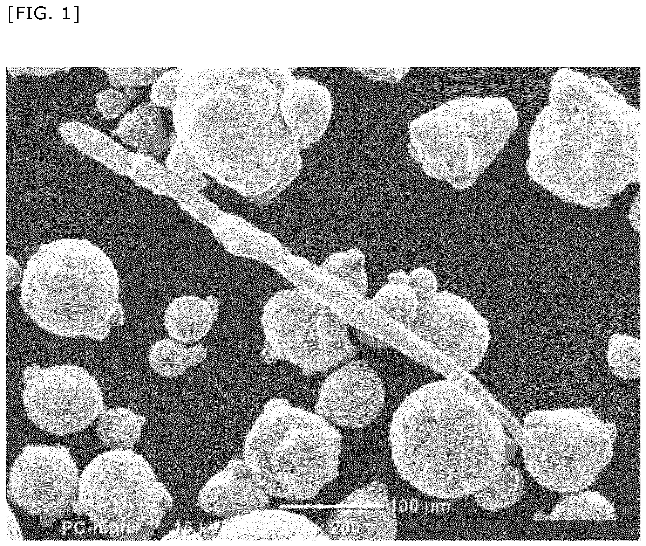

Therefore, the present inventors have examined the clogged portion of a nozzle, and found out that acicular particles each having a major axis diameter of about 300 to 800 $\mu$m as shown in FIG. 1 have deposited in the clogged portion, and that the accumulation of the acicular particles at the powder discharge portion due to transporting the powder for a long period of time has caused nozzle clogging. The diameter of the nozzle outlet of the powder discharge portion is usually approximately equal to or slightly larger than the major axis diameters of the acicular particles. As described above, it has been found out that a problem of clogging caused by the acicular particles arises, in view of a long-term fluidity as in an actual operation.

The formation of the acicular particles does not necessarily occur every time in the production of a metal powder (for example, an atomized powder), and occurs unexpectedly and unintentionally. Basically, by classification of the metal powder, most of the acicular particles are separated through sieving, and thus a large portion of the acicular particles are removed. Since the proportion of the acicular particles is reduced by classification as compared to that before classification, it has previously been regarded that classification is enough to avoid a problem of clogging. This is because classification enables the flow rate (s/50 g) as defined in JIS to fall within an acceptable range for measurement. However, since the flow rate as defined in JIS is evaluated using a small amount of powder as small as 50 g, this measurement method is not suitable for the evaluation in the case of supplying a trace amount of the acicular particles through a nozzle for a long period of time. Therefore, it can be said that contamination by a trace amount of the acicular particles in the powder, which occurs unexpectedly, is difficult to be detected and evaluated accurately by the evaluation based on the measurement of a small amount powder, such as one defined in JIS. As a result, contamination by an extremely trace amount of the acicular particles in the powder has not previously been sufficiently recognized as a problem and examined.

However, in directed energy deposition additive manufacturing in which a metal powder is allowed to flow inside a nozzle for a long period of time, even such an extremely small amount of the acicular particles deposits in the nozzle during the long-term operation, causing a problem of clogging. Therefore, there is a need for a powder for metal additive manufacturing from which the acicular particles formed unexpectedly and unintentionally have been removed as much as possible.

Accordingly, an object of the present invention is to provide a metal powder with a low content of the acicular particles, suitable for use in a directed energy deposition additive manufacturing apparatus in which the powder is supplied through a nozzle.

SOLUTION TO PROBLEM

As a result of intensive studies, the present inventors have developed a metal powder for additive manufacturing with a low content of the acicular particles, which reduces the risk of nozzle clogging, based on the viewpoints described below.

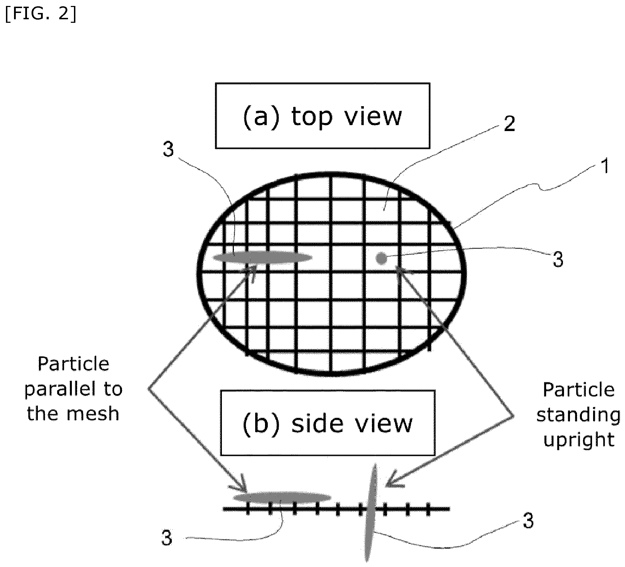

The present inventors have found out that one of the causes of the phenomenon in which the acicular particle in the powder passes through the mesh of a sieve with an aperture size (the distance between adjacent wires in the mesh of the sieve) smaller than the major axis diameter of the acicular particle, which occurs during classification of the powder, is that the acicular particle in the powder changes its orientation to stand upright, due to an intense vibration applied to the powder during classification of the powder. When the acicular particle stands upright, its minor axis diameter, which is smaller than the size of the aperture, faces the direction of the mesh of the sieve, resulting in the phenomenon in which the acicular particle passes through the sieve while standing vertically (see FIG. 2).

In the case of classifying a powder using a common vibrating sieve apparatus, tapping balls made of urethane rubber are placed on top of the sieve. In the case where the powder is classified using the vibrating sieve apparatus without using tapping balls or with a decreased number of tapping balls, the vibration is reduced, and therefore the acicular particles are not as intensely vibrated as in the case of using tapping balls. Accordingly, (1) sieving is performed sequentially by a vibrating sieve apparatus using a plurality of sieves varying in aperture size, in a state in which tapping balls are used as usual, to obtain a powder having a predetermined particle size; and then (2) the resulting powder is subjected to sieving by a vibrating sieve apparatus using a sieve with a slightly larger aperture size, without using tapping balls or with a decreased number of tapping balls. As a result, the phenomenon in which the acicular particles stand upright due to the vibration is suppressed, and the acicular particles remain lying horizontally on the sieve with a slightly larger aperture size, thereby allowing the powder having a predetermined particle size to pass through the mesh of the sieve without clogging. Therefore, it is possible to efficiently remove the acicular particles alone.

As described above, the present inventors have found out that, when the phenomenon in which the acicular particles stand upright is suppressed by not using tapping balls or by drastically decreasing the number of tapping balls to reduce the vibration applied to the powder, it is possible to suitably obtain a metal powder for additive manufacturing in which the proportion of the acicular particles is extremely small, after classification through sieving.

In order to achieve the object as described above, the present invention provides the following metal powder for additive manufacturing.

[1] A metal powder for additive manufacturing, wherein the proportion of the number of particles each having an aspect ratio of 0.4 or less and a longest diameter of 150 $\mu$m or more is 0.30% or less, based on the number of all particles constituting the powder.

[2] The metal powder for additive manufacturing according to [1], wherein the maximum value of the longest diameters of all particles constituting the powder is 1000 $\mu$m or less.

[3] The metal powder for additive manufacturing according to [1] or [2], wherein the proportion of the number of particles each having an aspect ratio of 0.4 or less and a longest diameter of 150 $\mu$m or more is 0.01% or more, based on the number of all particles constituting the powder.

Further, the present invention provides a method of producing a metal powder for additive manufacturing, wherein the proportion of the number of particles each having an aspect ratio of 0.4 or less and a longest diameter of 150 $\mu$m or more is 0.30% or less, based on the number of all particles constituting the powder, the method including a step of producing the metal powder for additive manufacturing by:

performing sieving sequentially by a vibrating sieve apparatus using a sieve with a large aperture size and a sieve with a small aperture size, in a state in which tapping balls are used as usual; and subjecting the resulting metal powder to sieving again by a vibrating sieve apparatus using a sieve with a large aperture size or an aperture size larger than that, without using tapping balls or with a decreased number of tapping balls.

It is possible to efficiently remove the acicular particles, by a procedure utilizing the difference in vibration due to the presence or absence of tapping balls.

ADVANTAGEOUS EFFECTS OF INVENTION

The metal powder for additive manufacturing according to the present invention has an excellent long-term fluidity. Therefore, when the metal powder for additive manufacturing according to the present invention is used in additive manufacturing, such as directed energy deposition additive manufacturing in which the powder is supplied through a nozzle, it is possible to prevent the powder from clogging the nozzle during the additive manufacturing operation, thereby continuing the additive manufacturing operation for a long period of time without nozzle clogging. Further, when the metal powder for additive manufacturing according to the present invention is used in additive manufacturing, it is possible to obtain a dense shaped article with a low porosity. Furthermore, when the maximum value of the longest diameters of all particles constituting the metal powder for additive manufacturing according to the present invention is adjusted to 1000 $\mu$m or less, it is possible to obtain a dense shaped article with a lower porosity, and to ensure a stable fluidity continuously during the additive manufacturing operation, making it possible to further reduce nozzle clogging.

BRIEF DESCRIPTION OF DRAWINGS

FIG. 1 shows a secondary electron image of an acicular particle in a Ni-based alloy powder, captured by a scanning electron microscope (SEM).
FIG. 2 illustrates a phenomenon in which an acicular particle standing upright passes through the mesh (slit) of the sieve used for classification. FIG. 2(a) is a schematic top view, and FIG. 2(b) is a schematic side view.

DETAILED DESCRIPTION OF INVENTION

The metal powder for additive manufacturing according to the present invention (hereinafter, referred to as "metal powder according to the present invention") will be described below.

The metal powder according to the present invention is composed of a large number of metal particles.

In the metal powder according to the present invention, the proportion of the number of particles each having an aspect ratio of 0.4 or less and a longest diameter of 150 μm or more is 0.30% or less, based on the number of all particles constituting the metal powder according to the present invention.

In the present invention, the particle having an aspect ratio of 0.4 or less and a longest diameter of 150 μm or more is referred to as "acicular particle".

In the present invention, the "aspect ratio" of a particle refers to the ratio of the minor axis diameter of the particle to the major axis diameter of the particle (the minor axis diameter of the particle / the major axis diameter of the particle). The more elongated the shape of a particle is, the smaller the aspect ratio of the particle becomes.

In the present invention, the "major axis diameter" and "minor axis diameter" of a particle refer to the lengths of the longer and shorter sides, respectively, of a rectangle formed by enclosing the particle with two pairs of parallel lines.

In the present invention, the "longest diameter" of a particle refers to the maximum value of the distances between two arbitrary points on the contour of the particle.

In the present invention, the proportion (%) of the number of the acicular particles is determined based on the following formula.

Proportion (%) of number of acicular particles = (Number of acicular particles) / (Number of all particles constituting the powder) × 100

In general, the flow rate of a metal powder can be confirmed based on the method defined in JIS Z2502:2020. Specifically, the flow rate of a metal powder can be evaluated by opening the orifice at the lower end of a funnel containing 50 g of a sample of the metal powder, and measuring the time (s/50 g) required for the 50 g of the powder to fall from the funnel. The thus determined fluidity can be used as a guideline for evaluating the ease of handleability of the metal powder in a normal state when nozzle clogging does not occur.

However, in the case of evaluating the fluidity using a small amount of sample as small as 50 g, the behavior of the powder can be observed only for a short period of time less than 20 seconds. Therefore, in the case of evaluating whether or not the powder has a long-term fluidity, particularly, a practical fluidity suitable for directed energy deposition additive manufacturing, it is preferable to use an evaluation scale other than the fluidity in a normal state.

Accordingly, in the metal powder according to the present invention, the proportion of the number of the acicular particles is set to 0.30% or less, based on the number of all particles constituting the metal powder according to the present invention. The proportion of the number of the acicular particles in the metal powder according to the present invention is preferably 0.25% or less, more preferably 0.20% or less, and still more preferably 0.15% or less.

When the proportion of the number of the acicular particles is less than 0.01%, an extremely long period of time is required to carry out classification by a vibrating sieve apparatus, resulting in a marked decrease in productivity. Therefore, the proportion of the number of the acicular particles in the metal powder according to the present invention may be set to 0.01% or more. Alternatively, the proportion of the number of the acicular particles in the metal powder according to the present invention may be set to 0.02% or more. Each of these lower limits may be combined with any of the aforementioned upper limits.

The counting of the number of particles and the analysis of the shapes of particles can be carried out, for example, using an image analyzer, Morphologi G3, manufactured by Malvern Panalytical Ltd. Specifically, the counting and the shape analysis can be carried out as follows. First, a metal powder is scattered on a slide glass in a dispersed manner. For each of all particles constituting the metal powder, the shape of each particle that has been projected two-dimensionally by an optical microscope is observed to determine the major axis diameter, the minor axis diameter and the longest diameter of each particle. Specifically, the image of each particle is captured, and the shape parameters of each particle are calculated by image analysis, to determine the major axis diameter, the minor axis diameter and the longest diameter of each particle. Since these procedures can be performed through an automatic image capturing and an automatic analysis by computer software, it is possible to examine the number and the shapes of all particles constituting the metal powder. It is also possible to examine the number and the shapes of tens of thousands of particles. The metal powder to be subjected to the counting of the number of particles and the analysis of the shapes of particles is determined based on the relationship with the size of the mesh of the sieve to be used for classification. In one embodiment, a metal powder having a particle size of 45 μm or more is subjected to the counting of the number of particles and the analysis of the shapes of particles.

The maximum value of the longest diameters of all particles constituting the metal powder according to the present invention is preferably 1000 μm or less. In other words, it is preferable that the metal powder according to the present invention does not contain a particle having a longest diameter of more than 1000 $\mu$m. This is because nozzle clogging is more likely to occur when the longest diameter of a particle is excessively large. Even if the proportion of the number of the acicular particles satisfies the requirement of the present invention, the presence of even one particle having a longest diameter of more than 1000 $\mu$m may cause nozzle clogging. Therefore, the maximum value of the longest diameters of all particles constituting the metal powder according to the present invention is preferably 1000 $\mu$m or less, more preferably 370 $\mu$m or less, and still more preferably 300 $\mu$m or less. The lower limit of the aforementioned maximum value can be adjusted as appropriate. The lower limit of the aforementioned maximum value may be, for example, 100 $\mu$m or more, or 200 $\mu$m or more. Each of these lower limits may be combined with any of the aforementioned upper limits.

In the case where the metal powder according to the present invention is used in directed energy deposition additive manufacturing, the metal powder according to the present invention has a median diameter $D_{50}$ of, preferably 45 $\mu$m or more and 150 $\mu$m or less, more preferably 55 $\mu$m or more and 120 $\mu$m or less, and still more preferably 60 $\mu$m or more and 90 $\mu$m or less.

The "median diameter $D_{50}$" of the metal powder refers to the particle size at which the cumulative volume reaches 50%, in the volume-based cumulative frequency distribution curve obtained with the total volume of the metal powder taken as 100%. The median diameter $D_{50}$ is measured by the laser diffraction scattering method. A laser diffraction scattering particle size distribution analyzer, "Microtrac MT3000", manufactured by Nikkiso Co., Ltd., can be used, for example, as an apparatus suitable for the measurement as described above. The powder is poured into the cell of the aforementioned apparatus, along with pure water, and the particle size of the powder is detected based on the light scattering information of particles.

Examples of the component composition of the metal powder according to the present invention will be described below.

The metal powder according to the present invention may be, for example, a Ni-based alloy powder, a Co-based alloy powder, a Fe-based alloy powder, a Cu-based alloy powder, or the like.

[Ni-based Alloy Powder]

In one embodiment, the metal powder according to the present invention is a Ni-based alloy powder. The Ni-based alloy powder may consist of Ni and unavoidable impurities, or may contain one or more elements selected from the group consisting of Fe, Cr, C, Mn, Si, Mo, Co, Nb, Al, Ti and B, in addition to Ni and unavoidable impurities. In the case where the Ni-based alloy powder contains one or more elements selected from the group consisting of Fe, Cr, C, Mn, Si, Mo, Co, Nb, Al, Ti and B, the balance of the Ni-based alloy powder consists of Ni and unavoidable impurities.

[Co-based Alloy Powder]

In one embodiment, the metal powder according to the present invention is a Co-based alloy powder. The Co-based alloy powder may consist of Co and unavoidable impurities, or may contain one or two elements selected from the group consisting of Cr and Mo, in addition to Co and unavoidable impurities. In the case where the Co-based alloy powder contains one or two elements selected from the group consisting of Cr and Mo, the balance of the Co-based alloy powder consists of Co and unavoidable impurities.

[Fe-based Alloy Powder]

In one embodiment, the metal powder according to the present invention is a Fe-based alloy powder. The Fe-based alloy powder may consist of Fe and unavoidable impurities, or may contain one or more elements selected from the group consisting of Ni, Co, Mo, Ti, Al, Cr, Cu and C, in addition to Fe and unavoidable impurities. In the case where the Fe-based alloy powder contains one or more elements selected from the group consisting of Ni, Co, Mo, Ti, Al, Cr, Cu and C, the balance of the Fe-based alloy powder consists of Fe and unavoidable impurities.

[Cu-based Alloy Powder]

In one embodiment, the metal powder according to the present invention is a Cu-based alloy powder. The Cu-based alloy powder may consist of Cu and unavoidable impurities, or may contain Zr, in addition to Cu and unavoidable impurities. In the case where the Cu-based alloy powder contains Zr, the balance of the Cu-based alloy powder consists of Cu and unavoidable impurities.

An example of the method of producing the metal powder according to the present invention will be described below.

The metal powder according to the present invention can be obtained by preparing a metal powder raw material having a predetermined component composition, and classifying the thus prepared metal powder raw material.

The metal powder raw material may be, for example, a Ni-based alloy powder, a Co-based alloy powder, a Fe-based alloy powder, a Cu-based alloy powder or the like. The descriptions with respect to the Ni-based alloy powder, the Co-based alloy powder, the Fe-based alloy powder and the Cu-based alloy powder are the same as described above.

The metal powder raw material can be produced by any of various kinds of methods. However, the metal powder raw material is preferably produced by the atomization method. The gas atomization method is particularly preferred, of all types of the atomization method. In the gas atomization method, the raw material is introduced into a container (quartz crucible) having a hole at the bottom, and the raw material is melted by high-frequency induction heating in an argon gas atmosphere or a nitrogen gas atmosphere. When the molten metal of the raw material flows out from the hole at the bottom of the crucible, a high-speed argon gas or nitrogen gas is injected to cause the molten metal to scatter, and to be quenched and solidified, making it possible to obtain the metal powder raw material.

In one embodiment, the metal powder raw material is a gas-atomized powder obtained by the gas atomization method.

The metal powder raw material can be classified, for example, by a dry-type vibrating sieve apparatus. The vibrating sieve apparatus is an apparatus in which a sieve (screen) is vibrated by a motor, a vibrator or the like, to efficiently sieve the metal powder raw material on the sieve, thereby selecting particles having a predetermined size from the metal powder raw material. In the vibrating sieve apparatus, tapping balls are usually allowed to bounce on the sieve, in order to prevent clogging. The tapping balls are made, for example, of urethane. For example, it is possible to use a vibrating sieve (inner ring type) 502, manufactured by DALTON Corporation, as the vibrating sieve apparatus.

In classification of the metal powder raw material, sieving for removing the acicular particles is carried out after carrying out sieving for adjusting the particle size. Alternatively, sieving for adjusting the particle size may be carried out after carrying out sieving for removing the acicular particles.

In sieving for adjusting the particle size, first, the metal powder raw material is subjected to sieving by a vibrating sieve apparatus using a sieve with a large aperture size, in a state in which tapping balls are used as usual, to obtain an undersize fraction. Subsequently, the undersize fraction obtained as described above is subjected to sieving by a vibrating sieve apparatus using a sieve with a small aperture size, in a state in which tapping balls are used as usual, to obtain an oversize fraction. The thus obtained oversize fraction is a metal powder having a predetermined particle size (from the small aperture size to the large aperture size).

In sieving for removing the acicular particles, it is preferable to reduce vibration in order to suppress the phenomenon in which the acicular particles stand upright, with their minor axis diameters facing the direction of the mesh of the sieve, causing the acicular particles to pass through the mesh of the sieve while standing vertically. Sieving without using tapping balls or with a decreased number of tapping balls is generally less feasible, due to a decrease in classification efficiency. However, by not using tapping balls or decreasing the number of tapping balls, intentionally, it is possible to reduce the proportion of the number of the acicular particles in the metal powder obtained through sieving.

In sieving for removing the acicular particles, the metal powder obtained through sieving for adjusting the particle size is subjected to sieving by a vibrating sieve apparatus using a sieve with a large aperture size or an aperture size larger than that, without using tapping balls or with a decreased number of tapping balls, to actively remove the acicular particles, thereby obtaining an undersize fraction. The thus obtained undersize fraction is a metal powder according to the present invention in which the proportion of the number of the acicular particles has been reduced.

In the case of carrying out sieving by a vibrating sieve apparatus without using tapping balls or with a decreased number of tapping balls, the vibration tends to be reduced, and thus the acicular particles are not as intensely vibrated as compared to the case of using tapping balls as usual. Therefore, it is possible to suppress the phenomenon in which the acicular particles stand upright, with their minor axis diameters facing the direction of the mesh of the sieve, causing the acicular particles to pass through the mesh of the sieve while standing vertically. In other words, in sieving without using tapping balls or with a decreased number of tapping balls, it is possible to selectively remove the acicular particles having a major axis diameter larger than the aperture size of the sieve. In sieving without using tapping balls or with a decreased number of tapping balls, it is preferable to use a sieve with an aperture size larger than that of a sieve used in sieving for adjusting the particle size, in order to remove the acicular particles. This is for the purpose of preventing particles other than the acicular particles from clogging, thereby increasing classification efficiency. In sieving without using tapping balls or with a decreased number of tapping balls, it is possible to use a sieve with a nominal aperture size of, for example, 150 $\mu$m.

In one embodiment, the particle size of the metal powder according to the present invention is adjusted to 45 to 125 $\mu$m by classification of the metal powder raw material, making the metal powder suitable for directed energy deposition additive manufacturing. The metal powder having a particle size of 45 to 125 $\mu$m can be obtained by subjecting the metal powder raw material to sieving using a sieve with a nominal aperture size of 125 $\mu$m, and then subjecting the resulting undersize fraction to sieving using a sieve with a nominal aperture size of 45 $\mu$m, thereby obtaining an oversize fraction as the metal powder.

As one example of a specific classification procedure, the classification procedure used to obtain a metal powder having a reduced proportion of the number of the acicular particles and a particle size of 45 to 125 $\mu$m will be described below.

First, the metal powder raw material is subjected to sieving by a vibrating sieve apparatus using a sieve with a nominal aperture size of 125 μm, in a state in which tapping balls are used as usual, to obtain an undersize fraction. Subsequently, the undersize fraction obtained as described above is subjected to sieving by a vibrating sieve apparatus using a sieve with a nominal aperture size of 45 μm, in a state in which tapping balls are used as usual, to obtain an oversize fraction. Thereafter, the oversize fraction obtained as described above is subjected to sieving by a vibrating sieve apparatus using a sieve with a nominal aperture size of 150 μm, without using tapping balls, to actively remove the acicular particles, thereby obtaining an undersize fraction. The thus obtained undersize fraction is a metal powder having a reduced proportion of the number of the acicular particles and a particle size of 45 to 125 μm.

The additively-manufactured shaped article according to the present invention will be described below.

The additively-manufactured shaped article according to the present invention is an additively-manufactured shaped article obtained by additive manufacturing using an additive manufacturing material containing the metal powder according to the present invention.

Representative examples of additive manufacturing include powder bed fusion additive manufacturing and directed energy deposition additive manufacturing.

The additive manufacturing material may contain a material other than the metal powder according to the present invention (for example, a powder binder such as a resin powder). However, the material is preferably composed of the metal powder according to the present invention.

The additive manufacturing material containing the metal powder according to the present invention is suitable for use in directed energy deposition additive manufacturing.

The additively-manufactured shaped article according to the present invention preferably has a porosity of 0.14% or less, more preferably 0.12% or less, and still more preferably 0.06% or less. It is preferable that the lower limit of the porosity of the additively-manufactured shaped article according to the present invention is as small as possible.

The porosity of the additively-manufactured shaped article according to the present invention can be determined based on the following formula.

$$\text{Porosity (\%) = 100 (\%) - Relative density (\%)}$$

The relative density can be measured as described below. The density (g/ mm$^3$) of the additively-manufactured shaped article is calculated using the weight of the additively-manufactured shaped article in the air, the weight thereof in water and the density of water (Archimedes density measurement method). In the Archimedes density measurement method, the weight of the additively-manufactured shaped article in the air is divided by the volume of the additively-manufactured shaped article (the volume of the additively-manufactured shaped article = the weight of the additively-manufactured shaped article in water / the density of water at the measured temperature), to calculate the density of the additively-manufactured shaped article. In addition, the density (g/mm$^3$) of the powder used in the production of the additively-manufactured shaped article is calculated by dry density measurement using the constant volume expansion method (the gas used: helium gas, the apparatus used: Micromeritics AccuPyc 1330, manufactured by Shimadzu Corporation). The relative density (%) of the additively-manufactured shaped article is calculated from the density of the additively-manufactured shaped article and the density of the powder, based on the following formula.

Relative density (%) of additively-manufactured shaped article = Density of additively-manufactured shaped article / Density of powder $\times$ 100

Since an increase in the proportion of the number of the acicular particles in the powder used in additive manufacturing leads to a decrease in the supply amount of the powder from a powder supply nozzle, this results in an increase in the porosity of the additively-manufactured shaped article. In the case where the proportion of the number of the acicular particles is particularly high, nozzle clogging occurs midway, causing the powder to be no longer supplied, and as a result, the additive manufacturing operation is interrupted midway. In the metal powder according to the present invention, the proportion of the number of the acicular particles is small and the powder has a small adverse effect on the fluidity, and therefore, additive manufacturing using the metal powder according to the present invention makes it possible to obtain a dense additively shaped article with a low porosity.

EXAMPLES

Examples of the present invention will be described below.

<Preparation of Metal Powder Raw Materials>

Metal powder raw materials having the following component compositions were prepared by the gas atomization method. The symbol "%" in the following component compositions refers to % by mass.

[Ni-based alloy powder]

Fe: 23%, Cr: 20% C: 0.05%, Mn: 0.1%, Si: 0.2%, Mo: 3.0%, Co: 0.3%, Nb: 5.2%, Al: 0.5%, Ti: 0.9%, B: 0.003%, balance: Ni and unavoidable impurities

[Co-based alloy powder]

Cr: 28.0%, Mo: 6.0%, balance: Co and unavoidable impurities (this powder is a powder composed of Co-Cr-Mo alloy)

[Fe-based alloy powder]

Ni: 18.0%, Co: 9.0%, Mo: 4.9%, Ti: 0.7%, Al: 0.1%, Cr: 0.2%, Cu: 0.1%, C: 0.02%, balance: Fe and unavoidable impurities (this powder is a powder composed of maraging steel)

[Cu-based alloy powder]

Z: 1.0%, balance: Cu and unavoidable impurities (this powder is a powder composed of Cu-Zr alloy)
As shown in Table 1, the Ni-based alloy powder was used in Examples 1 and 2, the Co-based alloy powder was used in Examples 3 and 4, the Fe-based alloy powder was used in Examples 5 and 6, and the Cu-based alloy powder was used in Examples 7 and 8. As shown in Table 2, the Ni-based alloy powder was used in Comparative Examples 1 to 3, the Co-based alloy powder was used in Comparative Examples 4 to 6, the Fe-based alloy powder was used in Comparative Examples 7 to 9, and the Cu-based alloy powder was used in Comparative Examples 10 to 12.

<Classification of Metal Powder Raw Material>

Each metal powder raw material was classified. The classification was carried out by a dry-type vibrating sieve apparatus (a vibrating sieve (inner ring type) 502, manufactured by DALTON Corporation). By classification of each metal powder raw material, each metal powder having a reduced proportion of the number of the acicular particles and a particle size of 45 to 125 $\mu$m was obtained, as a metal powder for directed energy deposition additive manufacturing. The specific classification procedure is as follows.
First, each metal powder raw material was subjected to sieving by a vibrating sieve apparatus using a sieve with a nominal aperture size of 125 $\mu$m, in a state in which tapping balls were used as usual, to obtain an undersize fraction. Subsequently, the undersize fraction obtained as described above was subjected to sieving by a vibrating sieve apparatus using a sieve with a nominal aperture size of 45 $\mu$m, in a state in which tapping balls were used as usual, to obtain an oversize fraction. Thereafter, the oversize fraction obtained as described above was subjected to sieving by a vibrating sieve apparatus using a sieve with a nominal aperture size of 150 $\mu$m, without using tapping balls, to actively remove the acicular particles, thereby obtaining an undersize fraction. The thus obtained undersize fraction is a metal powder having a reduced proportion of the number of the acicular particles and a particle size of 45 to 125 $\mu$m.

<Evaluation of Metal Powder>

The median diameter $D_{50}$ ($\mu$m), the proportion of the number of the acicular particles (%), the maximum value ($\mu$m) of the longest diameters and the flow rate (s), of each metal powder having a reduced proportion of the number of the acicular particles and a particle size of 45 to 125 $\mu$m, were determined by the following methods. The results are shown in Tables 1 and 2.

[Median Diameter $D_{50}$]

The median diameter $D_{50}$ was measured by the laser diffraction scattering method using a laser diffraction scattering particle size distribution analyzer, "Microtrac MT3000", manufactured by Nikkiso Co., Ltd.

[Proportion of Number of Acicular Particles and Maximum Value of Longest Diameters]

The counting of the number of particles and the analysis of the shapes of particles were carried out using an image analyzer, Morphologi G3, manufactured by Malvern Panalytical Ltd. First, each metal powder was scattered on a slide glass in a dispersed manner. For each of all particles constituting the metal powder, the shape of each particle that had been projected two-dimensionally by an optical microscope was observed to determine the major axis diameter, the minor axis diameter and the longest diameter of each particle. Specifically, the image of each particle was captured, and the shape parameters of each particle were calculated by image analysis, to determine the major axis diameter, the minor axis diameter and the longest diameter of each particle. These procedures were performed through an automatic image capturing and an automatic analysis by computer software.

[Flow Rate]

The flow rate of each metal powder was evaluated based on the method defined in JIS Z2502:2020. Specifically, the flow rate of each metal powder was evaluated by opening the orifice at the lower end of a funnel containing 50 g of a sample of the metal powder, and measuring the time (s/50 g) required for the 50 g of the powder to fall from the funnel. The thus determined fluidity can be used as a guideline for evaluating the ease of handleability of the powder in a normal state when nozzle clogging does not occur.

<Production and Evaluation of Additively-Manufactured Shaped Article>

A 10 mm-square block was produced using each metal powder having a reduced proportion of the number of the acicular particles and a particle size of 45 to 125 $\mu$m, by a directed energy deposition three-dimensional additive manufacturing apparatus (LAMDA 200, manufactured by Mitsubishi Heavy Industries Machine Tool Co., Ltd.).

The porosity of each of the resulting additively-manufactured shaped articles was determined based on the following formula. The results are shown in Tables 1 and 2.

$$\texttt{Porosity (\%) = 100 (\%) - Relative density (\%)}$$

The relative density was measured as described below. The density (g/ mm$^3$) of the additively-manufactured shaped article was calculated using the weight of the additively-manufactured shaped article in the air, the weight thereof in water and the density of water (Archimedes density measurement method). In the Archimedes density measurement method, the weight of the additively-manufactured shaped article in the air was divided by the volume of the additively-manufactured shaped article ( the volume of the additively-manufactured shaped article = the weight of the additively-manufactured shaped article in water / the density of water at the measured temperature), to calculate the density of the additively-manufactured shaped article. In addition, the density (g/ mm$^3$) of the powder used in the production of the additively-manufactured shaped article was calculated by dry density measurement using the constant volume expansion method (the gas used: helium gas, the apparatus used: Micromeritics AccuPyc 1330, manufactured by Shimadzu Corporation). The relative density (%) of the additively-manufactured shaped article was calculated from the density of the additively-manufactured shaped article and the density of the powder, based on the following formula.

Relative density (%) of additively-manufactured shaped article = Density of additively-manufactured shaped article / Density of powder $\times$ 100

[Table 1]

| | | Type of alloy | $D_{50}$ ($\mu$m) | Proportion of number of acicular particles (%) | Maximum value of longest diameters ($\mu$m) | Flow rate (s) | Porosity (%) |
|---|---|---|---|---|---|---|---|
| | Example 1 | Ni-based alloy | 76.0 | 0.27 | 536 | 14.3 | 0.14 |
| | Example 2 | Ni-based alloy | 76.5 | 0.07 | 303 | 14.7 | 0.04 |
| | Example 3 | Co-based alloy | 70.1 | 0.24 | 507 | 16.6 | 0.13 |
| | Example 4 | Co-based alloy | 78.2 | 0.02 | 248 | 15.3 | 0.01 |
| | Example 5 | Fe-based alloy | 75.9 | 0.24 | 507 | 15.7 | 0.12 |

(continued)

|  | Type of alloy | $D_{50}$ ($\mu$m) | Proportion of number of acicular particles (%) | Maximum value of longest diameters ($\mu$m) | Flow rate (s) | Porosity (%) |
|---|---|---|---|---|---|---|
| Example 6 | Fe-based alloy | 70.9 | 0.02 | 244 | 16.1 | 0.01 |
| Example 7 | Cu-based alloy | 77.2 | 0.24 | 507 | 14.1 | 0.12 |
| Example 8 | Cu-based alloy | 72.4 | 0.12 | 361 | 14.6 | 0.06 |

[Table 2]

|  | Type of alloy | $D_{50}$ ($\mu$m) | Proportion of number of acicular particles (%) | Maximum value of longest diameters ($\mu$m) | Flow rate (s) | Porosity (%) |
|---|---|---|---|---|---|---|
| Comparative Example 1 | Ni-based alloy | 79.2 | 0.31 | 507 | 14.7 | 0.24 |
| Comparative Example 2 | Ni-based alloy | 73.2 | 0.49 | 966 | 14.1 | 0.96 |
| Comparative Example 3 | Ni-based alloy | 70.3 | 0.60 | 1269 | 15.1 | Clogging occurred midway |
| Comparative Example 4 | Co-based alloy | 77.9 | 0.32 | 545 | 15.9 | 0.40 |
| Comparative Example 5 | Co-based alloy | 71.9 | 0.47 | 927 | 15.5 | 0.72 |
| Comparative Example 6 | Co-based alloy | 77.4 | 0.59 | 1231 | 15.8 | Clogging occurred midway |
| Comparative Example 7 | Fe-based alloy | 77.7 | 0.32 | 546 | 14.9 | 0.45 |
| Comparative Example 8 | Fe-based alloy | 72.1 | 0.41 | 767 | 15.3 | 0.75 |
| Comparative Example 9 | Fe-based alloy | 80.0 | 0.59 | 1231 | 15.5 | Clogging occurred midway |
| Comparative Example 10 | Cu-based alloy | 78.9 | 0.34 | 584 | 15.3 | 0.33 |
| Comparative Example 11 | Cu-based alloy | 79.6 | 0.47 | 926 | 15.9 | 0.86 |
| Comparative Example 12 | Cu-based alloy | 74.1 | 0.62 | 1309 | 15.7 | Clogging occurred midway |

<Relationship between Proportion of Number of Acicular Particles and Porosity of Additively-Manufactured Shaped Article>

As can be seen from Tables 1 and 2, an increase in the proportion of the number of the acicular particles led to a decrease in the supply amount of the powder from the powder supply nozzle, and thus resulted in an increase in the porosity of the resulting additively-manufactured shaped articles. In the case where the proportion of the number of the acicular particles was particularly high, nozzle clogging occurred midway, causing the metal powder to be no longer supplied. As a result, the additive manufacturing operation was interrupted midway.

In the metal powders of Examples 1 to 8, the proportion of the number of the acicular particles was small and had a small adverse effect on the fluidity. Therefore, when the metal powders were used in additive manufacturing, the resulting additively-manufactured shaped articles had a low porosity, making it possible to obtain dense additively manufactured shaped articles.

In the metal powders of Comparative Examples 1 to 12, the proportion of the number of the acicular particles was large, and thus the resulting additively-manufactured shaped articles had a higher porosity as compared to the metal powders of Examples 1 to 8. In addition, since the metal powders of Comparative Examples 3, 6, 9 and 12 contained particles having a longest diameter of more than 1000 $\mu$m, clogging occurred during the additive manufacturing operation, resulting in a failure to obtain additively-manufactured shaped articles.

INDUSTRIAL APPLICABILITY

The metal powder according to the present invention is suitable as a metal powder for additive manufacturing, which is used for producing a metal part or the like three-dimensionally by additive manufacturing, and particularly suitable as a metal powder for directed energy deposition additive manufacturing.

DESCRIPTION OF SYMBOLS

1    sieve (screen)
2    gap in mesh of sieve
3    acicular particle

**Claims**

1. A metal powder for additive manufacturing, wherein the proportion of the number of particles each having an aspect ratio of 0.4 or less and a longest diameter of 150 $\mu$m or more is 0.30% or less, based on the number of all particles constituting the powder.

2. The metal powder for additive manufacturing according to claim 1, wherein the maximum value of the longest diameters of all particles constituting the powder is 1000 $\mu$m or less.

3. The metal powder for additive manufacturing according to claim 1 or 2, wherein the proportion of the number of particles each having an aspect ratio of 0.4 or less and a longest diameter of 150 $\mu$m or more is 0.01% or more, based on the number of all particles constituting the powder.

[FIG. 1]

[FIG. 2]

## INTERNATIONAL SEARCH REPORT

| International application No. |
| --- |
| **PCT/JP2024/007810** |

**A.    CLASSIFICATION OF SUBJECT MATTER**

*B22F 1/05*(2022.01)i; *B22F 1/06*(2022.01)i; *B22F 9/08*(2006.01)i; *B22F 10/22*(2021.01)i; *B33Y 70/00*(2020.01)i; *C22C 9/00*(2006.01)i; *C22C 19/05*(2006.01)i; *C22C 19/07*(2006.01)i; *C22C 38/00*(2006.01)i; *C22C 38/52*(2006.01)i

FI:    B22F1/05; B22F10/22; B22F1/06; B33Y70/00; C22C38/00 302Z; C22C38/52; C22C19/05 Z; C22C19/07 Z; C22C9/00; B22F9/08 A

According to International Patent Classification (IPC) or to both national classification and IPC

**B.    FIELDS SEARCHED**

Minimum documentation searched (classification system followed by classification symbols)

B22F1/05; B22F1/06; B22F9/08; B22F10/22; B33Y70/00; C22C9/00; C22C19/05; C22C19/07; C22C38/00; C22C38/52

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2016-102229 A (SANYO SPECIAL STEEL CO., LTD.) 02 June 2016 (2016-06-02)<br>entire text | 1-3 |
| A | JP 2008-063650 A (KABUSHIKI KAISHA KOBE SEIKO SHO) 21 March 2008 (2008-03-21)<br>entire text | 1-3 |
| P, A | JP 7412714 B1 (TANAKA KIKINZOKU KOGYO K.K.) 15 January 2024 (2024-01-15)<br>entire text | 1-3 |

☐ Further documents are listed in the continuation of Box C.         ☑ See patent family annex.

| | |
| --- | --- |
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "D"    document cited by the applicant in the international application | "X"    document of particular relevance; the claimed invention cannot be considered novel or cannot be considered to involve an inventive step when the document is taken alone |
| "E"    earlier application or patent but published on or after the international filing date | |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
| --- | --- |
| **15 April 2024** | **07 May 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/007810**

| Patent document cited in search report | | | Publication date (day/month/year) | Patent family member(s) | | | Publication date (day/month/year) |
|---|---|---|---|---|---|---|---|
| JP | 2016-102229 | A | 02 June 2016 | CN | 106794515 | A | |
| | | | | KR | 10-2017-0048438 | A | |
| JP | 2008-063650 | A | 21 March 2008 | (Family: none) | | | |
| JP | 7412714 | B1 | 15 January 2024 | (Family: none) | | | |

Form PCT/ISA/210 (patent family annex) (July 2022)

**EP 4 678 309 A1**

**Patent documents cited in the description**

- JP 4661842 B
- JP 2015196264 A
- JP 2021075784 A